## Europäisches Patentamt

## European Patent Office

## Office européen des brevets

(19)

(11) Veröffentlichungsnummer: **0 108 282**
**B1**

(12) **EUROPÄISCHE PATENTSCHRIFT**

(45) Veröffentlichungstag der Patentschrift:
**03.05.89**

(51) Int. Cl.⁴: **A 47 G 27/02, E 04 F 15/02,
B 32 B 3/00**

(21) Anmeldenummer: **83110213.2**

(22) Anmeldetag: **13.10.83**

(54) **Plattenförmiges Element für Bodenbeläge.**

(30) Priorität: **04.11.82 CH 6422/82
10.12.82 CH 6422/82**

(43) Veröffentlichungstag der Anmeldung:
**16.05.84 Patentblatt 84/20**

(45) Bekanntmachung des Hinweises auf die Patenterteilung:
**03.05.89 Patentblatt 89/18**

(84) Benannte Vertragsstaaten:
**AT BE DE FR GB IT LU NL SE**

(56) Entgegenhaltungen:
**CH-A- 436 369
DE-A- 1 404 609
DE-A- 2 432 273
DE-A- 2 915 622
FR-A- 2 294 293
FR-A- 2 462 515
GB-A- 1 265 625
US-A- 3 120 083**

**BETONSTEIN-ZEITUNG, Band 37, Nr. 6, Juni 1971, Seite
378, Wiesbaden, DE; "MIGUTEC-Lager für
Betonwerksteinplatten"**

(73) Patentinhaber: **Forbo-Lachen AG, Alpenblickstrasse,
CH-8853 Lachen (CH)**

(72) Erfinder: **Meroni, Rico, Steineggstrasse, Block a,
CH-8853 Altendorf (CH)**

(74) Vertreter: **Blum, Rudolf Emil Ernst et al, c/o E. Blum &
Co Patentanwälte Vorderberg 11, CH-8044 Zürich (CH)**

## Beschreibung

Die Erfindung betrifft ein plattenförmiges Element für Bodenbeläge mit mindestens einem Unterteil, der einstückig als ein von einem Rand umgebenes Gitterwerk, das aus ersten Gitterstäben, die eine Dicke haben, die gleich der Höhe des Randes ist, und aus zweiten Gitterstäben besteht, die eine Dicke haben, die kleiner als die Höhe des Randes ist, ausgebildet ist und Aussparungen aufweist, die im Rand ausgebildet, zum Verlegen des Elementes vorgesehen sind und als zueinander beabstandete Schlitze im Rand ausgebildet und zur Aufnahme eines Halte- und Fixierelementes bestimmt sind.

Derartige Elemente zur Verlegung in Räumen oder im Freien sind bekannt. Diese Elemente bestehen entweder nur aus einem Belagmaterial, das direkt auf den Boden aufgelegt wird, oder einem Element, das auf den Boden aufgelegt wird, wobei das Belagmaterial auf dem Boden befestigt wird bzw. die Elemente mittels Befestigungselementen untereinander verbunden werden.

Aus der GB-A-1 265 625 ist ein plattenförmiges Element für Bodenbeläge mit mindestens einem Unterteil bekannt, der einstückig als ein von einem Rand umgebenes Gitterwerk ausgebildet ist und Aussparungen aufweist, die im Rand ausgebildet und zur Verlegen des Elementes vorgesehen sind. Das Gitterwerk besteht aus ersten Gitterstäben, nämlich dem Rand selbst, die eine Dicke haben, die gleich der Höhe des Randes ist, und aus zweiten Gitterstäben, die eine Dicke haben, die kleiner als die Höhe des Randes ist. Die Aussparungen sind als zueinander beabstandete Schlitze im Rand ausgebildet und zur Aufnahme eines Halte- und Fixierelementes bestimmt.

Diese platttenförmigen Elemente haben den Nachteil, daß elektrische Leitungen nicht unterhalb des Bodenbelags verlegt werden können.

Ziel der Erfindung ist ein plattenförmiges Element zu schaffen, das den angegebenen Nachteil behebt und schnell verlegbar oder zusammenlegbar ist.

Dieses Ziel wird erfindungsgemäß mit den kennzeichnenden Merkmalen des Patentanspruches 1 erreicht.

Ein Bodenbelag unter Verwendung des plattenförmigen Elementes ist erfindungsgemäß dadurch gekennzeichnet, daß die Elemente aneinanderliegend auf den zu belegenden Boden ausgelegt sind und daß als Halte- und Fixierelement Befestigungselemente vorgesehen sind, die in die Schlitze der aneinanderliegenden Elemente einsetzbar sind, um die Elemente untereinander zu verbinden.

Als Vorteil ergibt sich daraus, daß die plattenförmigen Elemente einzeln ohne besonderen Aufwand auswechselbar sind, um abgetretene oder verschmutzte Elemente zu ersetzen.

Besondere Ausführungsarten der Erfindungen sind in den abhängigen Ansprüchen 2–11 und 13–14 angegeben.

Im folgenden ist ein Ausführungsbeispiel des Erfindungsgegenstandes anhand der Zeichnungen näher erläutert. Es zeigen:

Fig. 1 eine perspektive Ansicht eines Ausführungsbeispiels des erfindungemäßen Elementes,

Fig. 2 ein perspektivisch und auseinandergezogen dargestelltes Ausführungsbeispiel eines Teils des in Fig. 1 dargestellten Elementes,

Fig. 3 ein perspektivisch dargestellter Teil eines fertiggestellten Elementes mit einem Befestigungsorgan, und

Fig. 4 eine Seitenansicht des in Fig. 3 dargestellten Elementes aus der die Befestigung der Elemente untereinander ersichtlich ist.

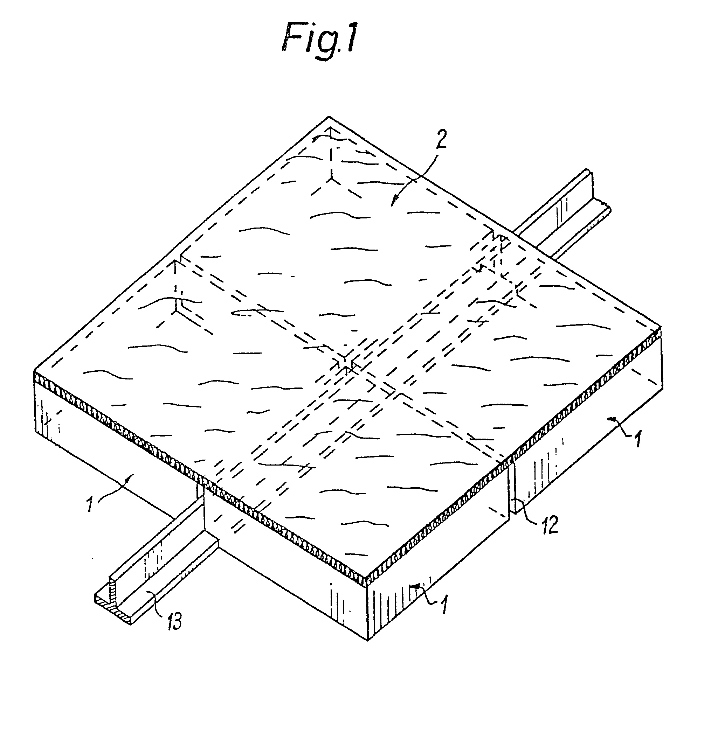

Wie Fig. 1 zeigt, besteht ein plattenförmiges Element aus vier Unterteilen 1 und einem textilen Belagmaterial 2, das mit einer Seite der Unterteile 1 verbunden ist. Die Unterteile 1 sind quadratisch ausgebildet und so angeordnet, daß zwischen den nebeneinanderliegenden Unterteilen 1 ein Spalt 12 vorhanden ist.

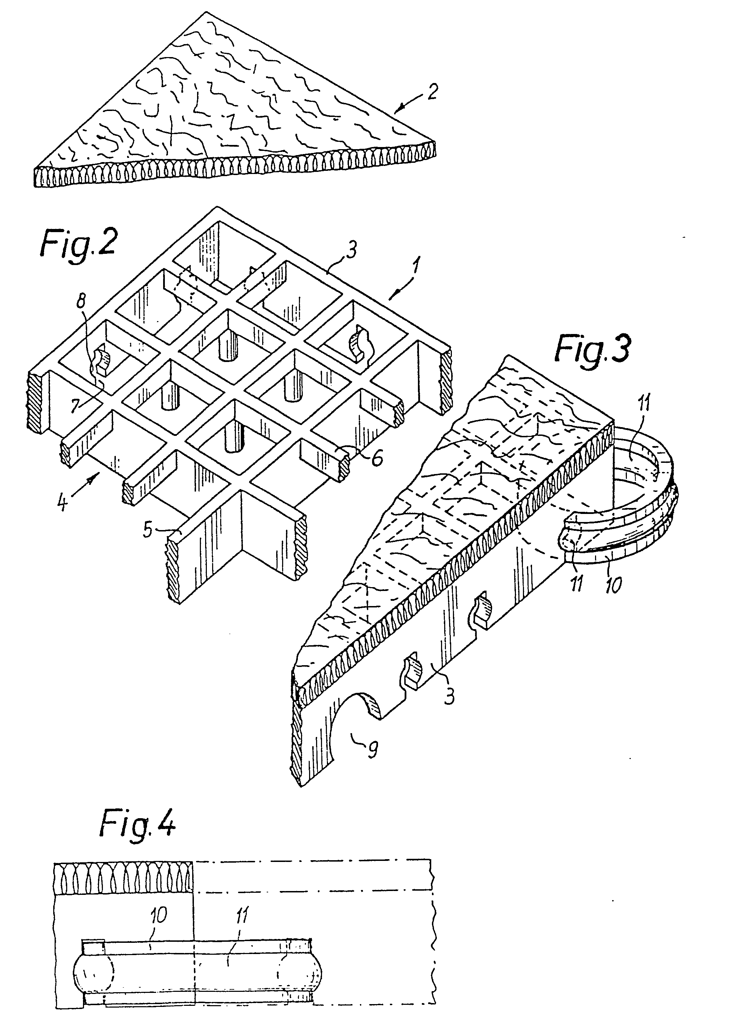

Aus Fig. 2 ist ersichtlich, daß der Unterteil 1 einstückig als ein von einem Rand 3 umgebenes Gitterwerk 4 ausgebildet ist. Der Rand 3 wird aus aufrechtstehenden Abschnitten mit rechteckförmigem Querschnitt gebildet.

Das Gitterwerk 3 wird aus ersten Gitterstäben 5, die eine Dicke haben die gleich der Höhe des Randes 3 ist, und aus zwei Gitterstäben 6 gebildet, die eine Dicke haben die kleiner als die Höhe des Randes 3 ist. Das Gitterwerk 4 hat eine quadratische Maschenform, wobei die ersten Gitterstäbe 5 ein Stützgitter größerer Weite und die zweiten Gitterstäbe 6 ein Auflagegitter geringerer Weite bilden. Die zweiten Gitterstäbe 6 sind bezüglich dem Rand 3 so ausgebildet, daß eine Fläche der zweiten Gitterstäbe 6 mit einer Kantenfläche des Randes 3 in der gleichen Ebene liegen, welche die Auflageebene für das Belagmaterial 2 bildet.

Das Gitterwerk 4 hat eine quadratische Maschenform. Es kann aber auch eine rhombische Maschenform haben.

In den Abschnitten des Randes 3 sind Schlitze 7 vorgesehen, die in gleichen Abständen der einzelnen Abschnitte ausgebildet sind. Die Schlitze 7 weisen symmetrisch ausgebildete Ausbuchtungen 8 auf, die eine runde Form haben.

Der Unterteil 1 besteht aus Kunststoff und kann z.B. aus Polyethylen, Polyvinylchlorid, Polystyrol, Polypropylen oder Polyvinylacetat hergestellt sein.

Das textile Bodenbelagmaterial kann aus einem genadelten, getufteten oder gewobenen Material bestehen.

Zur Herstellung des Elementes wird das Belagsmaterial 2 in eine Spritzgussform eingelegt und anschließend wird der Unterteil 1 aufgespritzt.

Das Material für den Unterteil wird mit einer Temperatur von 180 °C bis 220 °C und mit einem Preßdruck von 220–400 kp/cm$_2$ in die Form gepreßt. Dadurch entsteht eine intensive Verbindung zwischen dem Belagsmaterial 2 und dem mit diesem in Berührung kommenden Teil des Unterteiles 1.

Als Spritzgußmaterial wird Polypropylen, Polyvinylchlorid oder Polystyrol verwendet.

Um zu verhindern, daß das Fasermaterial des Belagmaterials 2 abschmilzt, muß die Form mit Wasser gekühlt werden.

Wie Fig. 3 zeigt, sind im Rand 3 weitere Aussparungen 9 ausgebildet, die eine halbrunde Form aufweisen und an der Seite des Randes 3, die der mit dem Belagmaterial 1 belegten Seite gegenüberliegt, offen sind.

Wie Fig. 4 zeigt, werden die plattenförmigen Elemente aneinanderstoßend verlegt, so daß Bodenbelagmaterial an der Oberseite liegt. Um die so verlegten Elemente miteinander zu verbinden, wird ein Ring 10 verwendet. Wie aus Fig. 3 und 4 ersichtlich, hat der Ring 10 einen Querschnitt der gleich dem Querschnitt des Schlitzes 7 ist. Eine an der Innen- und Außenfläche des Ringes 9 ausgebildete Wulst 11 greift in die Ausbuchtung 8 des Schlitzes 7 ein, wodurch ein Herausrutschen des Ringes 10 verhindert wird.

Anstelle des Ringes 10 können auch Halte- und Fixierorgane verwendet werden, die rechteckförmig oder oval sind.

Als Verlegungshilfe sind ⊥-förmige Halteorgane 13 vorgesehen (Fig. 1). Die Halteorgane 13 sind so auf den zu belegenden Boden aufgelegt, daß der Stegteil in den Spalt 12 zwischen den Unterteilen 1 hineinragt, um die Teile in Stellung zu halten. Die Halteorgane 13 können aus Metall oder Kunststoff bestehen, wobei die Höhe des Stegteiles im Maximum gleich der Höhe des Randes ist.

## Patentansprüche

1. Plattenförmiges Element für Bodenbeläge mit mindestens einem Unterteil (1), der einstückig als ein von einem Rand (3) umgebenes Gitterwerk (4), das aus ersten Gitterstäben (5), die eine Dicke haben, die gleich der Höhe des Randes (3) ist, und aus zweiten Gitterstäben (6) besteht, die eine Dicke haben, die kleiner als die Höhe des Randes (3) ist, ausgebildet ist und Aussparungen (7) aufweist, die im Rand (3) ausgebildet, zum Verlegen des Elementes vorgesehen sind und als zueinander beabstandete Schlitze im Rand (3) ausgebildet und zur Aufnahme eines Halte- und Fixierelementes (10) bestimmt sind, dadurch gekennzeichnet, daß auf einer Seite des Unterteils (1) ein textiles Belagmaterial (2) aufgebracht ist und daß eine Anzahl von Unterteilen (1) vorgesehen sind, die jeweils nebeneinanderliegend mit dem Belagmaterial (2) so verbunden sind, das zwischen den jeweils benachbarten Unterteilen (1) ein Spalt (12) vorhanden ist.

2. Element nach Anspruch 1, dadurch gekennzeichnet, daß jeder Schlitz (7) seitliche Ausbuchtungen (8) aufweist, die symmetrisch ausgebildet sind.

3. Element nach Anspruch 1, dadurch gekennzeichnet, daß zweite Aussparungen (9) im Rand (3) und in den ersten Gitterstäben (5) vorgesehen und derart ausgebildet sind, daß sie an der mit dem Belagmaterial (2) versehenen Seite des Randes und der ersten Gitterstäbe (5) gegenüberliegende Seite offen sind, um einen Durchlaß unterhalb des Belagmaterials zu bilden.

4. Element nach Anspruch 1, dadurch gekennzeichnet, daß eine geradzahlige Anzahl von Unterteilen (1) vorgesehen ist.

5. Element nach Anspruch 1, dadurch gekennzeichnet, daß eine ungeradzahlige Anzahl von Unterteilen (1) vorgesehen ist.

6. Element nach Anspruch 1, dadurch gekennzeichnet, daß das textile Belagmaterial (2) ein genadeltes Bodenbelagmaterial ist.

7. Element nach Anspruch 1, dadurch gekennzeichnet, daß das textile Belagmaterial (2) ein getuftetes Bodenbelagmaterial ist.

8. Element nach Anspruch 1, dadurch gekennzeichnet, daß das textile Belagmaterial (2) ein gewobenes Bodenbelagmaterial ist.

9. Element nach Anspruch 1, dadurch gekennzeichnet, daß der Unterteil aus einem Material aus der Gruppe der Polymerisate, wie z.B. Polyethylen, PVC, Polystyrol, Polypropylen oder Polyvinylacetat, und/oder der Copolymerisate besteht.

10. Element nach Anspruch 1, dadurch gekennzeichnet, daß das Gitterwerk (3) eine quadratische oder rhombische Maschenform hat.

11. Element nach einem der Ansprüche 1–10, dadurch gekennzeichnet, daß der Unterteil (1) auf das Belagsmaterial (2) direkt hinterspritzt ist.

12. Bodenbelag unter Verwendung des plattenförmigen Elementes nach Anspruch 1, dadurch gekennzeichnet, daß die Elemente aneinanderliegend auf den zu belegenden Boden ausgelegt sind und daß als Halte- und Fixierelement Befestigungselemente (10) vorgesehen sind, die in die Schlitze (7) der aneinanderliegenden Elemente einsetzbar sind, um die Elemente untereinander zu verbinden und zu fixieren.

13. Bodenbelag nach Anspruch 12, dadurch gekennzeichnet, daß das Befestigungselement (10) ein Ring ist, dessen Querschnitt die gleiche Form wie der Schlitz (7) hat.

14. Bodenbelag nach Anspruch 12, dadurch gekennzeichnet, daß ⊥-förmige Halteorgane (13) als Verlegungshilfe vorgesehen sind, die mit dem Flanschteil auf den zu belegenden Boden so auflegbar sind, daß der Stegteil in den Spalt (12) zwischen den benachbarten Unterteilen (1) eines Elementes ragt, um die Elemente auszurichten.

## Claims

1. Plate-like element intended as floor covering having at least one integral base element (1) in the form of a lattice work (4) surrounded by a rim (3), which lattice work consists of first latticed bars (5) having a thickness equal to the height of the rim (3), and of second latticed bars (6) having a thickness smaller than the height of the rim (3), and which lattice work includes openings (7) provided in the rim (3) for installation of the plate-like element and which openings are shaped as slits spaced at a mutual distance from each other in the rim (3) and intended for receiving a holding and arresting member (10), characterized in that a textile covering material (2) is arranged at one side of the base element (1) and a number of base elements (1) are provided, which base elements are interconnected adjacently with the covering material (2), such that at least a gap (12) is present between respectively adjacent base elements (1).

2. Element according to claim 1, characterized in that each slit (7) comprises symmetrically shaped recesses (8).

3. Element according to claim 1, characterized in that second openings (9) are provided in the rim (3) and the first latticed bars (5) and are shaped such that they are open at the side opposite to the side of said rim and of said first latticed bars (5) provided with said covering material (2) in order to provide a thoroughfare under said covering material.

4. Element according to claim 1, characterized in that an even numbered amount of base elements (1) is foreseen.

5. Element according to claim 1, characterized in that an odd numbered amount of base elements (1) is foreseen.

6. Element according to claim 1, characterized in that the textile covering material (2) is a needled floor covering material.

7. Element according to claim 1, characterized in that the textile covering material (2) is a tufted floor covering material.

8. Element according to claim 1, characterized in that the textile covering material (2) is a woven floor covering material.

9. Element according to claim 1, characterized in that the base element consists of a material chosen from the group of polymerisates encompassing eg polyethylene, polyvinylchloride, polystyrene, polypropylene and polyvinylacetate and/or the copolymerisates.

10. Element according to claim 1, characterized in that the lattice work (3) has a square or orthorhombic shape.

11. Element according to one of claims 1 to 10, characterized in that the base element (1) is directly injection-molded onto the covering material (2).

12. Floor covering by using the plate-like element according to claim 1, characterized in that the elements are juxtaposed onto the floor to be covered and that fixing elements (10) are provided as holding and arresting element, which fixing elements are insertable into the slits (7) of the juxtaposed elements in order to connect and to fix said elements to each other.

13. Floor covering according to claim 12, characterized in that the fixing element (10) is an annular, the cross-section of which corresponds to the shape of the slit (7).

14. Floor covering according to claim 12, characterized in that ⊥-shaped holding members (13) are provided for the aid of bedding, which members are placeable to the floor to be covered such that the web section projects into the gap (12) between the adjacent base elements (1) of a plate-like element in order to aligne the elements.

**Revendications**

1. Elément en forme de carreau pour recouvrements de sol comprenant au moins une pièce inférieure (1), qui est réalisée d'une pièce sous la forme d'une grille (4), qui est entourée par un bord (3), est constituée de première barres (5), qui ont une épaisseur égale à la hauteur du bord (3), et de deuxièmes barres (6), qui ont une épaisseur plus petite que la hauteur du bord (3), et présente des évidements (7) qui, réalisés dans le bord (3), sont prévus pour la pose de l'élément, sont réalisés dans le bord (3) sous la forme d'entailles disposées à distance l'une de l'autre et sont destinés à recevoir un élément de retenue et de fixation (10), caractérisé en ce qu'une matière de recouvrement textile (2) est appliquée sur une face de la pièce inférieure (1) et en ce qu'on prévoit un certain nombre de pièces inférieures (1) qui, disposées l'une à côté de l'autre, sont reliées à la matière de recouvrement (2) de façon qu'il y ait un intervalle (12) entre les pièces inférieures respectivement voisines (1).

2. Elément suivant la revendication 1, caractérisé en ce que chaque entaille (7) présente des évasements latéraux (8) qui sont façonnés de manière symétrique.

3. Elément suivant la revendication 1, caractérisé en ce que deux évidements (9) sont prévus et façonnés dans le bord (3) et dans les premières barres (5) de façon à être ouvertes du côté opposé à la face du bord et des premières barres (5), qui est pourvue de la matière de recouvrement (2), pour former un passage en dessous de la matière de recouvrement.

4. Elément suivant la revendication 1, caractérisé en ce qu'on prévoit un nombre pair de pièces inférieures (1).

5. Elément suivant la revendication 1, caractérisé en ce qu'un nombre impair de pièces inférieures (1) est prévu.

6. Elément suivant la revendication 1, caractérisé en ce que la matière de recouvrement textile (2) est une matière de recouvrement de sol aiguilletée.

7. Elément suivant la revendication 1, caractérisé en ce que la matière de recouvrement textile (2) est une matière de recouvrement de sol touffetée.

8. Elément suivant la revendication 1, caractérisé en ce que la matière de recouvrement textile (2) est une matière de recouvrement de sol tissée.

9. Elément suivant la revendication 1, caractérisé en ce que la pièce intérieure est constituée d'une matière du groupe des produits de polymérisation, tels que par exemple du polyéthylène, du chlorure de polyvinyle, du polystyrène, du polypropylène ou de l'acétate de polyvinyle, et/ou des produits de copolymérisation.

10. Elément suivant la revendication 1, caractérisé en ce que la grille (3) a une forme à mailles carrées ou en losanges.

11. Elément suivant l'une des revendications 1 à 10, caractérisé en ce que la pièce inférieure (1) est directement injectée sur la matière de recouvrement (2).

12. Recouvrement de sol faisant usage de l'élément en forme de carreau suivant la revendication 1, caractérisé en ce que les éléments sont posés l'un à côté de l'autre sur le sol à recouvrir et en ce que, comme élément de fixation et de retenue, on prévoit des éléments de fixation (10) qui peuvent être introduits dans les entailles (7) des éléments disposés l'un à côté de l'autre, pour relier les éléments entre eux et les fixer.

13. Revêtement de sol suivant la revendication 12, caractérisé en ce que l'élément de fixation (10) est un anneau dont la section transversale a la même forme que l'entaille (7).

14. Recouvrement de sol suivant la revendication 12, caractérisé en ce que des organes de support en forme de ⊥ (13) sont prévus comme moyens auxiliaires de pose, qui peuvent être posés sur le sol à recouvrir par la partie d'aile de façon que la partie d'âme fasse saillie dans l'intervalle (12) entre les pièces inférieures voisines (1), afin d'aligner les éléments.

# Fig.1

*Fig.2*

*Fig.3*

*Fig.4*